(19) Europäisches Patentamt
European Patent Office
Office européen des brevets

(11) EP 2 837 071 B1

(12) FASCICULE DE BREVET EUROPEEN

(45) Date de publication et mention de la délivrance du brevet:
06.06.2018 Bulletin 2018/23

(51) Int Cl.:
*H01S 3/00* (2006.01)      *H01S 3/23* (2006.01)

(21) Numéro de dépôt: 13720483.0

(22) Date de dépôt: 12.04.2013

(86) Numéro de dépôt international:
PCT/FR2013/050807

(87) Numéro de publication internationale:
WO 2013/153344 (17.10.2013 Gazette 2013/42)

(54) **SYSTÈME ET PROCÉDÉ D'AMPLIFICATION OPTIQUE D'IMPULSIONS LUMINEUSES ULTRA-BRÈVES AU-DELÀ DE LA LIMITE DE LA BANDE SPECTRALE DE GAIN**

SYSTEM UND VERFAHREN ZUR OPTISCHEN VERSTÄRKUNG VON ULTRAKURZEN LICHTIMPULSEN JENSEITS DER GRENZE DES SPEKTRALEN VERSTÄRKUNGSBANDES

SYSTEM AND METHOD FOR THE OPTICAL AMPLIFICATION OF ULTRASHORT LIGHT PULSES BEYOND THE LIMIT OF THE SPECTRAL GAIN BAND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.04.2012 FR 1253390**

(43) Date de publication de la demande:
**18.02.2015 Bulletin 2015/08**

(73) Titulaire: **Amplitude Systemes
33600 Pessac (FR)**

(72) Inventeurs:
• **DELAIGUE, Martin
F-33100 Bordeaux (FR)**

• **HONNINGER, Clemens
F-33610 Cestas (FR)**
• **MOTTAY, Eric
F-33130 Begles (FR)**

(74) Mandataire: **Jacobacci Coralis Harle
32, rue de l'Arcade
75008 Paris (FR)**

(56) Documents cités:
**EP-A2- 2 086 074        WO-A1-03/096495
WO-A1-2005/041367        WO-A2-2007/142843
US-A1- 2004 190 119      US-A1- 2004 240 037**

## Description

La présente invention concerne un système et un procédé d'amplification optique pour impulsions lumineuses ultrabrèves. Plus précisément, l'invention propose un système et un procédé d'amplification optique d'impulsions lumineuses ultra-brèves au-delà de la limite de la bande spectrale de gain.

Les lasers à impulsions lumineuses ultrabrèves (sub-picoseconde) et de forte énergie (plusieurs centaines de micro-joules) sont aujourd'hui utilisés dans de nombreuses applications industrielles telles que le micro-usinage, le marquage laser, l'ophtalmologie, la nanochirurgie et dans des applications scientifiques pour l'investigation de phénomènes physiques, chimiques ou biologiques rapides. Dans les dernières années, de grands progrès ont été faits dans la réduction de la durée et/ou l'augmentation de l'énergie des impulsions lumineuses ultra-brève à des fréquences de répétition élevées.

Les amplificateurs laser femtoseconde reposent typiquement soit une architecture linéaire (amplificateurs à barreaux, amplificateurs à disque mince, amplificateurs en plaques (ou slab) ou fibres optiques amplificatrices) ou sur une architecture multi-passage, par exemple pour les amplificateurs régénératifs. Cependant, l'amplification d'impulsions lumineuses sub-picoseconde dans un milieu amplificateur solide conduit à un élargissement de la durée des impulsions initiales du fait de la dispersion de la vitesse de groupe (GVD ou Group Velocity Dispersion) de l'amplificateur. Dans le présent document, on entend par « dispersion », la dispersion de vitesse de groupe (GVD pour Group Velocity Dispersion) d'un composant ou d'un matériau. Cette dispersion est quantifiée par un coefficient de dispersion du deuxième ordre $\beta_2$ dont la valeur dépend du type de composant optique (étireur à fibre optique, fibre optique microstructurée, fibre optique à réseau de Bragg, compresseur à réseau de diffraction, miroir diélectrique, amplificateur optique solide...) et du nombre de passages des impulsions lumineuses à travers ou sur le composant optique concerné. La dispersion est aussi appelée « chirp » de manière équivalente.

La plupart des amplificateurs laser sub-picoseconde appliquent la méthode d'amplification à dérive de fréquence (CPA, chirped pulse amplification) de manière à éviter des pics de surintensité susceptibles d'endommager les composants optiques ou de produire des effets non linéaires indésirables (D. Strickland, G. Mourou, "Compression of amplified chirped optical pulses", Opt. Commun. 56, 219, 1985). La technique d'amplification à dérive de fréquence repose sur l'application d'une dispersion normale ou positive (GVD>0) pour étirer temporellement (par un facteur x1000 ou plus) les impulsions lumineuses avant leur amplification, puis sur l'amplification en régime linéaire des impulsions étirées et enfin sur l'application d'une dispersion anormale ou négative (GVD<0) après amplification, de manière à comprimer temporellement les impulsions lumineuses amplifiées jusqu'à une durée minimum d'impulsion.

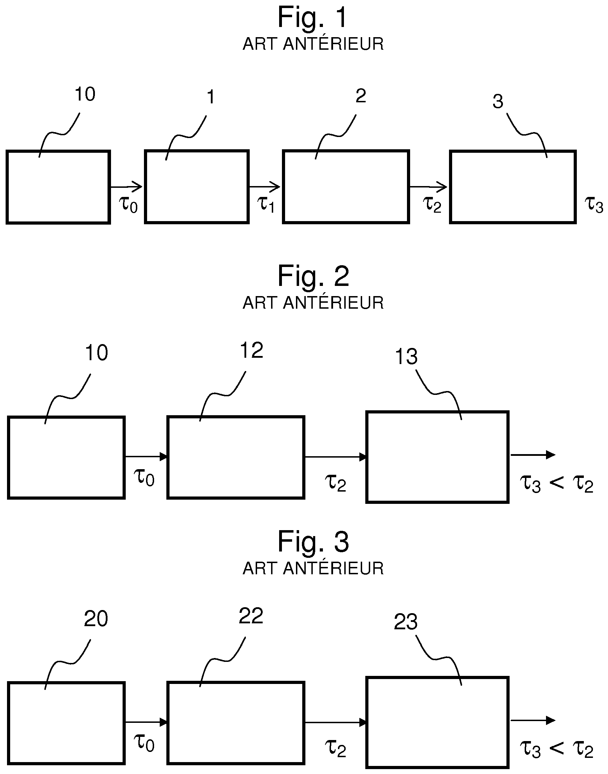

A titre d'exemple, la figure 1 représente un laser femtoseconde à amplification à dérive de fréquence selon l'art antérieur. Un oscillateur 10 génère des impulsions lumineuses de faible puissance et de durée initiale $\tau_0$ femtoseconde (typiquement de 100 fs à 900 fs). Un étireur 1 présentant une forte dispersion positive $(\beta_2^E \gg 0)$ où $\beta_2^E$ représente la dispersion de vitesse de groupe (GVD) permet d'étirer temporellement les impulsions lumineuses afin de réduire leur puissance crête sans modifier leur spectre. L'étirement temporel a pour effet de multiplier la durée des impulsions lumineuses par un facteur cent à mille (ou plus) : une impulsion de durée initiale $\tau_0$ femtoseconde provenant de l'oscillateur 10 a typiquement, en sortie de l'étireur 1, une durée $\tau_1$ comprise entre 100 ps et 1 ns. L'étirement temporel des impulsions permet d'éviter la génération d'effets non linéaires indésirables dans le système d'amplification et l'endommagement des composants optiques. Un amplificateur optique 2 permet d'amplifier les impulsions lumineuses étirées temporellement. L'amplificateur optique 2 présente un facteur de gain G qui dépend de son architecture (G ≈ 60dB pour un amplificateur régénératif, G ≈ 30-40dB pour un amplificateur à fibre, G ≈ 20-30dB pour un amplificateur à slab). En sortie de l'amplificateur optique 2, les impulsions lumineuses ont une durée $\tau_2$. Un compresseur 3 disposé en sortie de l'étage d'amplification permet de recomprimer temporellement les impulsions amplifiées. Le compresseur 3 présente une dispersion négative adaptée pour compenser l'effet de dispersion positive de l'étireur et de l'amplificateur : idéalement la dispersion du compresseur est égale à l'opposé de la somme de la dispersion de l'étireur et de la dispersion de l'amplificateur. En sortie du système amplificateur à dérive de fréquence, on obtient des impulsions lumineuses amplifiées de durée $\tau_3$ idéalement égale à la durée $\tau_0$ des impulsions initiales. En pratique, la durée $\tau_3$ des impulsions lumineuses en sortie d'un amplificateur à dérive de fréquence est souvent supérieure à la durée $\tau_0$ des impulsions initiales à cause d'un effet de rétrécissement de la bande de gain par le facteur de gain G comme décrit ci-dessous.

Théoriquement, la durée des impulsions amplifiées de sortie est limitée par la largeur de bande spectrale en fréquence de l'amplificateur optique. De manière ultime, la durée minimum $\tau$ des impulsions lumineuses qui peut être obtenue dépend de la largeur de la bande de gain de matériau laser choisi et du facteur de gain. La largeur de bande est définie comme étant la largeur à mi-hauteur (ou FWHM) de la fonction du gain en énergie ou en puissance, exprimée en fonction de la fréquence optique v, la fréquence optique *v* étant égale à c/λ, où c est la vitesse de la lumière et λ la longueur d'onde. Approximativement, on peut estimer que la durée minimum théorique des impulsions lumineuses est égale à environ :

$$\tau \approx \frac{1}{\Delta \nu}$$

où $\Delta \nu$ est la largeur à mi-hauteur de la bande spectrale de gain du matériau amplificateur. Les lasers à impulsions ultra-brèves, en particulier en régime femtoseconde, requièrent donc un milieu amplificateur ayant une grande largeur spectrale de gain.

Toutefois, la durée minimale des impulsions peut être limitée par un effet de rétrécissement de la bande de gain. En effet, selon le facteur de gain G, la durée minimum $\tau_3$ des impulsions lumineuses en sortie peut être proche de la durée $\tau_0$ des impulsions initiales ou significativement plus longue que la durée $\tau_0$ des impulsions initiales. Dans les amplificateurs lasers, l'effet de rétrécissement de la bande de gain réduit la largeur de la bande d'amplification à une valeur significativement plus étroite que la largeur de bande nominale de l'amplificateur. Cet effet dépend fortement du facteur de gain G. Un facteur de gain G élevé se traduit par une réduction significative de la largeur de bande spectrale de gain amplifié et conduit à une durée d'impulsions lumineuses de sortie plus longue, selon l'équation suivante (*cf.* Siegman, Lasers, University Science Books, p. 359, équation (78)) :

$$\tau_{out} = \tau_{in} \cdot \sqrt{1 + 4 \cdot \ln 2 \cdot G / \left( \pi^2 \Delta \nu^2 \cdot \tau_{in}^2 \right)}$$

où $\tau_{out}$ et $\tau_{in}$ sont les largeurs d'impulsions lumineuses respectivement à la sortie et à l'entrée de l'amplificateur.

Dans le cas des amplificateurs régénératifs de type Yb :YAG (C. Hönninger et al., "Diode-pumped thin-disk Yb:YAG regenerative amplifier", Appl. Phys. B 65, 423-426, 1997) et Yb : KYW (Larionov, Butze, Nickel, Giesen, High-repetition-rate regenerative thin-disk amplifier with 116 μJ pulse energy and 250 fs pulse duration, Optics Letters, Vol. 32, Issue 5, pp. 494-496, 2007), l'amplification d'impulsions initiales de durée $\tau_{in}$ sub-picoseconde et ayant une énergie de l'ordre de 100 pJ conduit des impulsions lumineuses amplifiées jusqu'à 100 μJ (G=60dB) dont la durée $\tau_{out}$ peut atteindre jusqu'à plusieurs picosecondes.

Différentes méthodes ont été appliquées pour dépasser cette limitation de la largeur de bande de gain et tenter de réduire la durée des impulsions lumineuses amplifiées. En particulier, certains dispositifs n'utilisent pas d'étireur avant l'amplificateur et exploitent les effets non linéaires tels que l'auto-modulation de phase (SPM) dans le milieu amplificateur ou dans un module de post-compression, en combinaison avec la dispersion de vitesse de groupe, de manière à compenser la dérive de fréquence produite (voir Larionov, Butze, Nickel, Giesen, High-repetition-rate regenerative thin-disk amplifier with 116 μJ pulse energy and 250 fs pulse duration, Optics Letters, Vol. 32, Issue 5, pp. 494-496, 2007 ; Larionov, 50 W thin-disk laser with variable pulse duration, Proc. SPIE 7912, 79120A, 2011 et W. Dietel et al., Self Phase Modulation in a Femtosecond Pulse Amplifier with Subséquent Compression", Appl. Phys. B 46, 183-184, 1988).

La figure 2 représente un exemple de dispositif de l'art antérieur comprenant un oscillateur 10, un amplificateur optique 12 suivi par un compresseur 13 à dispersion négative ($\beta_2 \ll 0$). Notons que le dispositif de la figure 2 est dépourvu d'étireur entre l'oscillateur 10 et l'amplificateur 12. L'oscillateur 10 émet des impulsions initiales de durée $\tau_0$ qui sont directement transmises, sans être étirées temporellement, à l'amplificateur 12. Les impulsions se propagent dans l'amplificateur 12 et induisent des effets non linéaires dans l'amplificateur 12. En particulier, on utilise l'effet non-linéaire d'automodulation de phase dans l'amplificateur 12 pour générer un déphasage non-linéaire et de nouvelles composantes spectrales. Ce dispositif permet ainsi d'élargir la bande spectrale de l'amplificateur 12. Cependant, les phases des composantes spectrales présentent de grandes variations sur la bande spectrale transmise. Le compresseur 14 induit une dispersion négative dans le but de remettre en phase les différentes composantes spectrales, ce qui permet, dans certaines conditions d'obtenir des impulsions lumineuses de sortie de durée $\tau_3$ d'environ 334 fs pour une durée $\tau_0$ de 200fs des impulsions lumineuses initiales (Larionov, 50 W thin-disk laser with variable pulse duration, Proc. SPIE 7912, 79120A, 2011).

Toutefois, ces approches sont limitées en termes de durée minimum d'impulsions et/ou en termes de qualité temporelle des impulsions ultra brèves ainsi générées. Par exemple, un amplificateur régénératif Yb:YAG utilisant uniquement l'auto-modulation de phase et ayant pour effet l'élargissement spectral avec un facteur d'amplification important, génère des impulsions ultra brèves qui sont soit limitées à une durée minimum d'environ 600fs avec une bonne qualité temporelle ou soit de durée plus courte, environ 400fs, avec un piédestal significatif situé dans une trainée beaucoup plus longue de l'ordre de la ps suite à l'impulsion principale (Larionov, 50 W thin-disk laser with variable pulse duration, Proc. SPIE 7912, 79120A, 2011).

D'autre part, il existe des lasers dont les impulsions lumineuses sont recomprimées dans un module externe de post-compression après amplification. La figure 3 représente un schéma de post-compression. Un amplificateur 22 génère des impulsions lumineuses de durée $\tau_2$ picoseconde ou femtoseconde. L'amplificateur 22 est suivi d'un post-compresseur 23, qui introduit de l'automodulation de phase puis une dispersion de vitesse de groupe négative ($\beta_2 < 0$). Le post-compresseur 23 peut être réalisé à partir d'une fibre monomode pour des impulsions de basse énergie (entre 1 nJ et 500 nJ) ou d'une fibre creuse remplie de gaz pour des impulsions de forte énergie (supérieure à 100 μJ). La post-compression peut s'appliquer à des impulsions lumineuses picoseconde ou femtoseconde. La post-compression des impulsions lumineuses repose sur un élargissement spectral par auto-modulation de phase suivi par une dispersion négative en quantité convenable pour obtenir une compression temporelle optimale (C.V. Shank, R.L. Fork, R. Yen, and R.H. Stolen, Appl. Phys. Lett. 40n 761, 1982 ; T. Damm, M. Kaschke, F. Noack, B. Wilhelmi, Opt. Lett. 10, 176, 1985 ; M. Nisoli, S. Stagira, S. De Silvestri, O. Svelto, S. Sartania, Z. Cheng, M. Lenzner, Ch. Spielmann, F. Krausz, Appl. Phys. B, 65, 186-196, 1997). Toutefois, dans un module de post-compression basé sur une fibre optique, la nécessité d'un couplage monomode limite l'énergie des impulsions lumineuses à un niveau relativement faible inférieur au micro-joule (μJ). D'autre part, on observe une dégradation spatiale du faisceau laser post-comprimé, car l'effet d'automodulation de phase n'est pas homogène à travers le profil spatial du faisceau laser, les effets non-linéaires étant plus forts au centre du faisceau Gaussien que sur les bords. Les inconvénients de cette approche sont la nécessité d'un module externe additionnel de post-compression, la complexité supplémentaire, les pertes de puissance et dans certains cas la dégradation de la qualité spatiale des impulsions lumineuses par des inhomogénéités spatiales induites par l'auto-modulation de phase.

D'autres méthodes reposent sur la génération d'auto-modulation de phase dans des fibres creuses remplies de gaz (M. Nisoli et al., Appl. Phys. B, 65, 186-196, 1997) ou simplement sur l'utilisation d'un milieu non linéaire tel qu'un bloc de cristal ou de verre. Ces deux approches souffrent d'une dégradation significative de la qualité spatiale du faisceau pendant la génération des effets non linéaires. Des pertes de puissance typiques sont de l'ordre de 50 %.

D'autres documents de brevet (US2004/0190119_A1 et EP2086074_A2) décrivent un système amplificateur linéaire comprenant un étireur ou pré-compensateur à dispersion négative, une fibre optique amplificatrice à dispersion positive dans laquelle se produit de l'auto-modulation de phase et éventuellement un compresseur. Ces systèmes amplificateurs permettent de générer des impulsions amplifiées ayant une durée inférieure à une centaine de femtosecondes. Toutefois, l'énergie des impulsions amplifiées est limitée à quelques nanojoules par l'apparition d'effets non linéaires excessifs dans la fibre optique amplificatrice, notamment d'effet Raman non-linéaire. A plus haute énergie, ces effets non linéaires sont susceptibles de générer un piédestal dans les impulsions re-comprimées.

L'amplification d'impulsions lumineuses sub-picoseconde ou femtoseconde et de haute énergie est jusqu'à présente limitée par la bande de gain de l'amplificateur. WO03096495 divulgue un système d'amplification optique d'impulsions ultrabrèves et de haute énergie comprenant un étireur à dispersion négative et un amplificateur optique à faible dispersion positive. L'utilisation d'effets non linéaires pour réduire la durée des impulsions amplifiées présente généralement des limites en termes de puissance, d'énergie et/ou de qualité spatiale des impulsions lumineuses de sortie.

La présente invention a pour but de remédier à ces inconvénients et concerne plus particulièrement un système d'amplification optique d'impulsions lumineuses ultrabrèves de haute énergie de durée inférieure à la limitation par la largeur de bande de l'amplificateur optique, ledit système comprenant un oscillateur apte à émettre des impulsions lumineuses ultrabrèves de durée $\tau_0$ inférieure ou égale à dix picosecondes, un amplificateur optique ayant une largeur de bande spectrale de gain en fréquence $\Delta v$ et une dispersion de vitesse de groupe $\beta_2^{ampli}$, l'amplificateur optique étant disposé de manière à recevoir des impulsions lumineuses et à générer des impulsions lumineuses amplifiées.

Selon l'invention, le système d'amplification optique comporte un pré-compensateur optique disposé en amont de l'amplificateur optique, le pré-compensateur ayant une dispersion de vitesse de groupe $\beta_2$ négative, de manière à recevoir les impulsions lumineuses ultrabrèves de durée $\tau_0$ et à générer des impulsions lumineuses de durée $\tau_1$ chirpées négativement et l'amplificateur optique présente une dispersion de vitesse de groupe $\beta_2^{ampli}$ positive, l'amplificateur optique étant disposé de manière à recevoir, amplifier et comprimer temporellement les impulsions lumineuses de durée $\tau_1$ chirpées négativement, l'amplificateur optique étant configuré de manière à ce que les impulsions lumineuses soient aptes à induire un élargissement de la bande spectrale de gain $\Delta v$ par automodulation de phase, de manière à générer des impulsions lumineuses amplifiées et comprimées temporellement ayant une durée $\tau_2$ inférieure ou égale à la durée $\tau_1$. Lesdites impulsions lumineuses amplifiées et comprimées temporellement ont une énergie supérieure à quelques dizaines de micro-joule et de préférence supérieure à plusieurs centaines de micro-joule.

Avantageusement, la somme de la dispersion de vitesse de groupe $\beta_2$ négative du pré-compensateur et de la dispersion de vitesse de groupe $\beta_2^{ampli}$ positive de l'amplificateur optique est inférieure ou égale à :

$$\beta_2 + \beta_2^{ampli} \leq 0{,}5\,ps^2$$

De manière préférentielle, la somme de la dispersion de vitesse de groupe $\beta_2$ négative du pré-compensateur et de la dispersion de vitesse de groupe $\beta_2^{ampli}$ positive de l'amplificateur optique est inférieure ou égale à $0.1 ps^2$.

Selon différents aspects particuliers et avantageux de l'invention :

- le pré-compensateur comporte une fibre optique à réseau de Bragg à chirp négatif, un compresseur à prisme et/ou un compresseur à réseau de diffraction ;
- l'oscillateur est un oscillateur fibré ou un oscillateur à base de cristaux solide.

Selon un mode de réalisation préféré de l'invention, le système d'amplification optique d'impulsions lumineuses ultrabrèves comporte en outre un compresseur disposé de manière à recevoir les impulsions lumineuses amplifiées de durée $\tau_2$, ledit compresseur ayant une dispersion de vitesse de groupe négative apte à compenser une dispersion positive des impulsions lumineuses amplifiées de durée $\tau_2$, de manière à générer des impulsions lumineuses amplifiées et recomprimées temporellement de durée $\tau_3$ inférieure à la durée $\tau_2$.

Avantageusement, la somme de la dispersion de vitesse de groupe négative du pré-compensateur, de la dispersion de vitesse de groupe positive de l'amplificateur optique et de la dispersion de vitesse de groupe du compresseur est inférieure ou égale à 0,5 ps$^2$.

De manière préférentielle la somme de la dispersion de vitesse de groupe négative du pré-compensateur, de la dispersion de vitesse de groupe positive de l'amplificateur optique et de la dispersion de vitesse de groupe du compresseur est inférieure ou égale à 0.1 ps$^2$.

De préférence, le compresseur comporte au moins un miroir à dérive de fréquence négative et/ou au moins un réseau de diffraction.

Selon l'invention, l'amplificateur optique comporte un amplificateur optique à disque mince ou à matrice cristalline dopée terre rare, en particulier dopée ytterbium.

Avantageusement, l'amplificateur optique comporte un amplificateur optique à base d'Yb:YAG, Yb :KYW, Yb :KGW, Yb :CALGO, Yb :CaF$_2$, Yb :SrF$_2$, Yb :LuAG, Yb :Lu$_2$O$_3$, Yb :Sc$_2$O$_3$, Yb :Y$_2$O$_3$, Yb :YVO, Yb :YCOB, Yb :GdCOB, Yb :BOYS.

L'invention concerne aussi un procédé d'amplification optique d'impulsions lumineuses ultrabrèves et de haute énergie comprenant les étapes suivantes :

- génération d'impulsions lumineuses ultrabrèves de durée $\tau_0$ inférieure ou égale à dix picosecondes, et de préférence inférieure à cinq picoseconde ;
- application aux impulsions lumineuses ultrabrèves de durée $\tau_0$ d'une dispersion de vitesse de groupe négative avant l'amplification de manière à générer des impulsions lumineuses chirpées négativement de durée $\tau_1$ ; et
- amplification optique des impulsions lumineuses chirpées négativement, combinée à l'ajout d'une dispersion positive et à un effet d'automodulation de phase dans un milieu amplificateur optique solide de manière à induire un élargissement spectral du milieu amplificateur par automodulation de phase $\Delta v_{Amplificateur} > \Delta v$ et à comprimer temporellement les impulsions lumineuses amplifiées à une durée $\tau_3$ inférieure à la durée $\tau$ de la limitation par la largeur de bande de l'amplificateur optique :

$$\tau_3 \langle \quad \tau = \frac{1}{\Delta v}$$

L'invention trouvera une application particulièrement avantageuse dans les systèmes amplificateurs optiques pour impulsions lumineuses ultrabrèves.

La présente invention concerne également les caractéristiques qui ressortiront au cours de la description qui va suivre et qui devront être considérées isolément ou selon toutes leurs combinaisons techniquement possibles.

Cette description donnée à titre d'exemple non limitatif fera mieux comprendre comment l'invention peut être réalisée en référence aux dessins annexés sur lesquels :

- la figure 1 représente schématiquement un amplificateur laser à dérive de fréquence selon l'art antérieur ;
- la figure 2 représente schématiquement un autre système d'amplification selon l'art antérieur ;
- la figure 3 représente schématiquement un système de post-compression selon l'art antérieur ;
- la figure 4 représente schématiquement la propagation d'une impulsion lumineuse chirpée négativement ;
- la figure 5 représente schématiquement le principe d'un système d'amplification d'impulsions lumineuses selon l'invention ;
- la figure 6 représente schématiquement un système d'amplification d'impulsions lumineuses selon un mode de réalisation de l'invention ;
- la figure 7 représente schématiquement un système d'amplification d'impulsions lumineuses selon le mode de réalisation préféré de l'invention ;
- la figure 8 représente schématiquement un système d'amplification selon une variante du mode de réalisation de la figure 7 ;
- la figure 9 représente une mesure d'auto-corrélation d'impulsion en sortie d'un système amplificateur régénératif suivant le mode de réalisation préféré de l'invention basé sur un ampli amplificateur à disque mince Yb :YAG pour une impulsion de 200$\mu$J et de durée environ 360 fs;
- les figures 10A et 10B représentent des mesures d'auto-corrélation d'impulsion en sortie d'un système amplificateur Yb:KYW suivant le mode de réalisation préféré de l'invention respectivement pour un niveau d'énergie de 40$\mu$J (Fig. 10A) et de 70$\mu$J (Fig. 10B).

Une constatation faisant partie de la présente invention est que dans les dispositifs antérieurs, les impulsions lumineuses transmises à l'amplificateur sont soit chirpées positivement (approche CPA), soit non-chirpées (approche SPM). Les impulsions lumineuses voient alors dans l'amplificateur un chirp positif supplémentaire et la durée des impulsions se rallonge donc légèrement ou reste environ constante.

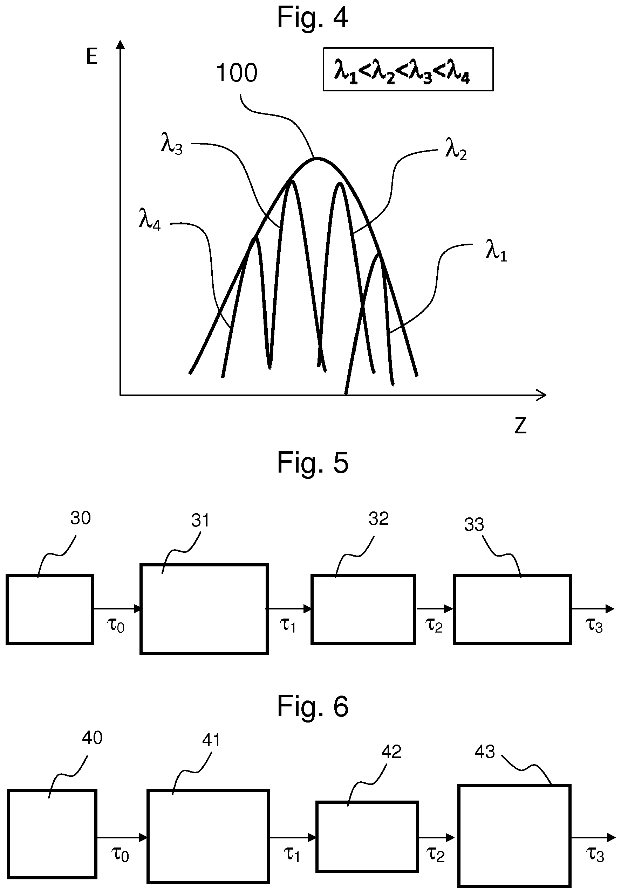

On propose d'appliquer une dispersion négative aux impulsions initiales avant leur amplification. La figure 4 représente schématiquement l'énergie E d'une impulsion ultrabrève en fonction d'un axe Z de propagation spatial. L'impulsion ultrabrève 100 comporte des composantes spectrales aux longueurs d'onde $\lambda_1$, $\lambda_2$, $\lambda_3$ et $\lambda_4$ telles que $\lambda_1 < \lambda_2 < \lambda_3 < \lambda_4$. La figure 4 illustre l'effet d'une dispersion négative sur la propagation de l'impulsion ultrabrève 100 : les longueurs d'onde les plus courtes $\lambda_1$ puis $\lambda_2$ (ou plus énergétiques) sont temporellement en avance par rapport aux longueurs d'onde plus longues (ou moins énergétiques) $\lambda_3$ puis $\lambda_4$.

La quantité de dispersion négative du pré-compensateur est dimensionnée correctement en fonction de la dispersion positive rencontrée par les impulsions pendant le processus d'amplification dans l'amplificateur optique en aval. Les meilleurs résultats sont obtenus lorsque la valeur de dispersion négative appliquée aux impulsions initiales avant amplification est à peu près équivalente à la valeur de la dispersion positive accumulée dans l'amplificateur. On obtient ainsi une compensation de la dispersion vers la fin du processus d'amplification. Ceci permet d'obtenir une compression d'impulsions efficace à l'intérieur de l'amplificateur. Ensuite, l'auto modulation de phase génère de manière efficace un élargissement spectral de manière à ce que les impulsions amplifiées puissent être recomprimées avec une bonne qualité temporelle. Cette compression (ou la compensation du déphasage non linéaire produit) peut être effectuée de manière facile par plusieurs réflexions sur des miroirs fortement réfléchissant à dispersion négative ou par un compresseur à base de réseau de diffraction modérément dispersif et de haute efficacité ou par un compresseur à base d'une paire de prismes. Préférentiellement, le compresseur est situé en dehors de la cavité amplificatrice.

La figure 5 illustre schématiquement le principe de l'invention. Un oscillateur 30 génère des impulsions lumineuses fs ou ps. Avantageusement, on utilise un oscillateur à fibre qui génère des impulsions de durée $\tau_0$ ps (chirpé) ou de durée $\tau_0$ fs. Un pré-compensateur 31 est disposé entre l'oscillateur 30 et l'amplificateur 32, qui est suivi optionnellement par un compresseur 33. Le pré-compensateur 31 présente une dispersion négative ($\beta_2 < 0$) de manière à ajouter un chirp négatif aux impulsions lumineuses provenant de l'oscillateur 30 sans induire de modification spectrale de ces impulsions lumineuses. Le pré-compensateur 31 génère un chirp négatif avant l'injection des impulsions lumineuses dans l'amplificateur optique 32. Comme l'amplificateur optique 32 possède une dispersion $\beta_2^{ampli}$ positive dans la gamme de longueur d'onde d'utilisation, autour de $1\mu$m, l'impulsion lumineuse est alors comprimée au cours de l'amplification, à la manière d'une impulsion « soliton ».

Avantageusement, on utilise un pré-compensateur 31 à base d'un réseau de Bragg chirpé (C-FBG), ayant une dispersion de vitesse de groupe $\beta_2$ négative, par exemple d'environ $-0.55$ps$^2$. La valeur de cette dispersion négative est de préférence choisie de façon que le chirp négatif après le pré-compensateur soit équivalent en valeur absolue à la dispersion positive induite par l'amplificateur 32 :

$$\beta_2 \approx -\left| \beta_2^{ampli} \right|$$

De manière alternative, on peut aussi utiliser un oscillateur à base de cristaux qui génère directement des impulsions chirpées négativement. Dans ce cas, l'oscillateur et le pré-compensateur forment un seul composant intégré en amont de l'amplificateur.

Dans le cas où l'oscillateur génère des impulsions sans chirp, le pré-compensateur 31 induit un chirp négatif, les impulsions à l'entrée de l'amplificateur sont chirpées négativement et étirées temporellement : $\tau_1 > \tau_0$. Dans le cas où l'oscillateur génère des impulsions avec un chirp positif, ce chirp positif doit être pris en compte pour le dimensionnement de la valeur de dispersion négative introduite par le pré-compensateur 31. En fonction de la valeur de dispersion positive à compenser dans l'amplificateur, la durée des impulsions négativement chirpées avant l'amplificateur, $\tau_1$, peut être inférieure, égale ou supérieure à la durée initiale de l'oscillateur positivement chirpé ($\tau_0$).

Dans l'amplificateur optique 32, une impulsion lumineuse chirpée négativement est à la fois amplifiée et comprimée temporellement par la dispersion positive de l'amplificateur : $\beta_2^{ampli}$. Cette dispersion positive est essentiellement définie par le milieu amplificateur actif (cristal laser ou slab ou disque mince) et par d'autres composants de l'amplificateur qui sont utilisés en transmission (par ex. une cellule Pockels dans une cavité régénérative). En même temps, l'impulsion lumineuse subit de l'auto modulation de phase (SPM) pendant le processus d'amplification. Cet effet de SPM est prépondérant à la fin du processus d'amplification où l'intensité des impulsions lumineuses est la plus élevée. La largeur spectrale d'une impulsion lumineuse en sortie de l'amplificateur 32 est élargie par l'effet de l'auto modulation de phase. L'impulsion lumineuse sort de l'amplificateur 32 avec une durée $\tau_2$ qui est sensiblement inférieure ou égale à la durée $\tau_1$ des impulsions lumineuses injectées. Le compresseur 33 présente une dispersion négative et permet de réduire encore la durée de l'impulsion lumineuse $\tau_3 \leq \tau_1$, $\tau_2$ tout en conservant une bonne qualité temporelle et spatiale. Avantageusement, on utilise un compresseur 33 à miroirs dispersifs ayant une dispersion négative $\beta_2 \leq 0$.

Avantageusement, l'amplificateur optique 32 comporte un milieu amplificateur solide. De préférence, on utilise un amplificateur à disque mince qui permet de répartir spatialement l'impulsion lumineuse sur un diamètre compris entre 100 $\mu$m et plusieurs mm.

Comparé à une « post-compression classique », tel que représenté en lien avec la figure 3, le système de la figure 5 présente l'avantage de produire une auto modulation de phase dans l'amplificateur optique 32 solide ce qui assure en même temps une homogénéisation de cet effet à travers le profil spatial du faisceau et ne dégrade donc pas la qualité spatiale du faisceau laser. L'automodulation de phase se produit lorsqu'une impulsion brève avec une intensité I se propage dans un milieu Kerr ayant un indice de réfraction non-linéaire. Un cristal laser et/ou une cellule de Pockels peuvent constituer ce milieu Kerr pouvant donc introduire de l'automodulation de phase.

Plus précisément, dans certains modes de réalisation, le milieu amplificateur lui-même, par son indice de réfraction non-linéaire, produit par effet Kerr de l'auto-modulation de phase. C'est le cas lorsque le milieu amplificateur est utilisé suivant un axe longitudinal, par exemple en géométrie slab ou en géométrie de cristal épais. Dans d'autres modes de réalisation, notamment pour un amplificateur à disque mince, la contribution du milieu amplificateur à l'automodulation de phase est faible. Dans ce cas , l'automodulation de phase peut se produire dans un composant optique séparé du milieu amplificateur, par exemple dans une cellule de Pockels comprenant un milieu non-linéaire ayant un indice Kerr.La figure 6 représente un système d'amplification d'impulsions lumineuses selon un mode de réalisation de l'invention. Un système dit de « Front-end injection » comporte un composant monolithique 40 comportant un oscillateur à fibre optique légèrement chirpé positif, un pré-compensateur 41 formé par un réseau de Bragg inscrit dans une fibre optique, le réseau de Bragg étant chirpé négativement. Le pré-compensateur 41 est suivi par un amplificateur 42, lui-même suivi par un compresseur 43. Le chirp négatif des impulsions lumineuses avant amplification, est dimensionné en fonction de paramètres de sortie souhaités et de l'amplificateur. Plus précisément, on essaie de compenser le pré-chirp négatif par la dispersion positive dans l'amplificateur. L'ajustement fin peut par exemple être réalisé par un contrôle du nombre de passages dans l'amplificateur régénératif. La mesure peut être effectuée via la largeur spectrale produite dans l'amplificateur ou en minimisant la durée des impulsions après le compresseur. L'amplificateur 42 est de préférence un amplificateur régénératif avec un milieu de gain Yb:YAG ou Yb:KYW (de géométrie barreau de cristal, disque mince utilisé suivant la direction mince, ou slab utilisé suivant un des axes longs) mais peut être aussi une autre matrice cristalline dopée Yb. Avantageusement, on utilise un compresseur 43 à miroirs dispersifs, par exemple de type multicouches diélectriques, ayant une dispersion $\beta_2 \leq 0$ de manière à ce que la durée $\tau_3$ des impulsions en sortie du système soit inférieure ou égale à la durée $\tau_0$ des impulsions initiales et à la durée $\tau_1$ des impulsions chirpées négativement.

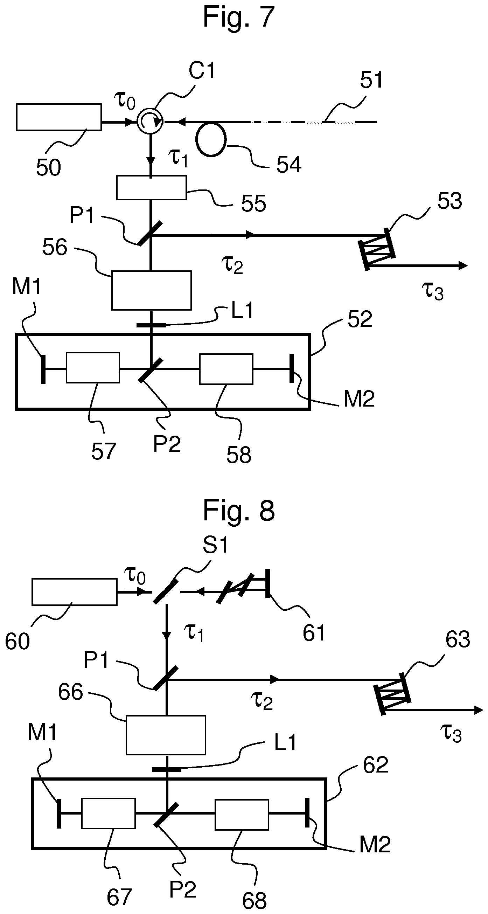

La figure 7 représente schématiquement un système d'amplification d'impulsions lumineuses selon le mode de réalisation préféré de l'invention. Le dispositif de la figure 7 comporte un oscillateur 50, un circulateur optique C1, un pré-compensateur 51 à dispersion négative, un pré-amplificateur 54, un collimateur 55, un polariseur P1, un rotateur de Faraday 56, une lame demi-onde L1, un amplificateur régénératif 52 et un compresseur 53. Avantageusement, l'amplificateur régénératif 52 comporte une cellule de Pockels 57, un milieu amplificateur à gain 58, des miroirs M1, M2, et un polariseur P2. L'oscillateur 50 est de préférence un oscillateur à fibre optique mais peut aussi être un oscillateur « solitonique » à base de cristaux laser et avec une cavité laser en espace libre. L'oscillateur 50 délivre des impulsions lumineuses de durée $\tau_0$ égale à environ 3ps, ces impulsions lumineuses étant chirpées positivement d'environ +0.27ps$^2$.

On note, comme cela est bien connu de l'homme du métier, que la dispersion s'exprime avec un signe opposé selon qu'elle est exprimée en ps$^2$ (dispersion exprimée en fonction de la fréquence optique) ou respectivement en ps/nm (dispersion exprimée en fonction de la longueur d'onde).

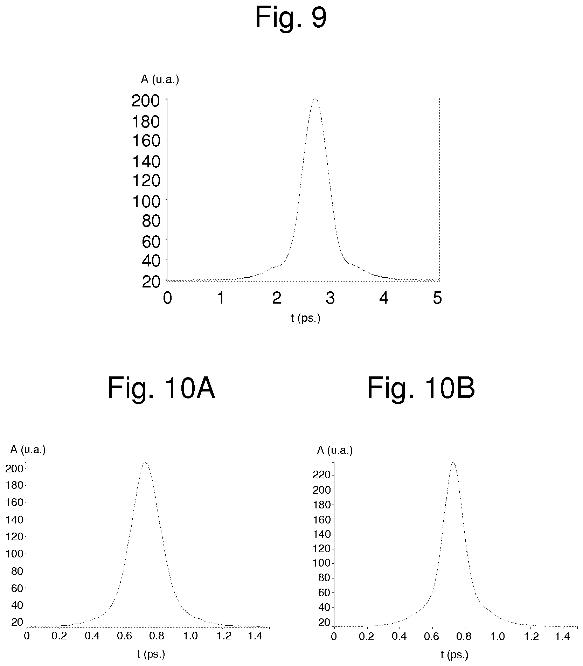

Le circulateur C1 dirige les impulsions initiales vers le pré-compensateur 51 formé par un réseau de Bragg à fibre optique chirpé négativement, présentant par exemple une dispersion $\beta_2$ égale à environ -0.55ps$^2$. Les impulsions lumineuses avant amplification présentent une durée $\tau_1$ d'environ 10 ps, et un chirp négatif d'environ - 0.27ps$^2$. La réflectivité du réseau de Bragg 51 est de préférence élevée. En option, par exemple si la réflectivité du réseau de Bragg 51 est faible, un pré-amplificateur 54 à faible gain peut être disposé entre le circulateur C1 et le réseau de Bragg 51. Le circulateur C1 dirige les impulsions lumineuses chirpées négativement de durée $\tau_1$ sur le troisième port du circulateur C1 vers le collimateur 55. Le polariseur P1 polarise linéairement les impulsions à l'entrée de l'amplificateur régénératif 52. Le rotateur de Faraday 56, la lame demi-onde et la cellule de Pockels permettent d'injecter une impulsion lumineuse dans la cavité de l'amplificateur régénératif 52. La cellule de Pockels 57 et le milieu amplificateur à gain 58 présentent chacun une dispersion positive. De façon avantageuse, le milieu de gain est Yb:YAG. La dispersion positive cumulée dans l'amplificateur régénératif 52 est d'environ 0.27ps$^2$. La durée $\tau_2$ des impulsions en sortie de l'amplificateur régénératif 52 est d'environ 1 ps (principalement dû au rétrécissement de la largeur de gain). La largeur de bande spectrale de gain après l'amplificateur régénératif 52 est d'environ 5 à 6 nm. La bande spectrale de gain est élargie par l'automodulation de phase accumulée essentiellement dans les derniers passages dans l'amplificateur régénératif 52. Le compresseur 53 est un compresseur à miroirs dispersifs et présente une dispersion négative de l'ordre de -0.03ps$^2$ à -0.05ps$^2$ (miroirs chirpés). Le compresseur 53 apporte typiquement une dispersion $\beta_2$ de seulement quelques -0.01ps$^2$ et peut donc consister de simples miroirs dispersifs avec quelques réflexions. En alternative, le compresseur 53 peut être basé sur un ou plusieurs réseaux de diffraction. En sortie, la durée $\tau_3$ des impulsions lumineuses est réduite à environ 360fs pour l'amplificateur Yb :YAG (cf. fig. 9). Pour l'amplificateur Yb :KYW, des impulsions ayant une durée de l'ordre de 150fs ou même 100fs peuvent être obtenues (cf. fig. 10A-10B).

La figure 8 représente schématiquement un système d'amplification selon une variante du mode de réalisation de la figure 7. Le dispositif de la figure 8 comporte un oscillateur 60, un séparateur S1, un pré-compensateur 61 à dispersion négative, un polariseur P1, un rotateur de Faraday 66, une lame demi-onde L1, un amplificateur régénératif 62 et un compresseur 63. L'amplificateur régénératif 62 comporte une cellule de Pockels 67, un milieu amplificateur à gain 68, des miroirs M1, M2, et un polariseur P2. Avantageusement, l'oscillateur 60 fournit des impulsions lumineuses de durée $\tau_0$ égale à environ 200 fs sans dispersion. Le pré-compensateur 61 est constitué d'une paire de réseaux de diffraction et présente une dispersion négative $\beta_2$ égale à environ -0.27ps$^2$. La dispersion positive cumulée dans l'amplificateur régénératif 62 est d'environ +0.27ps$^2$. Le compresseur 63 est un compresseur à miroirs dispersifs et présente une dispersion négative comprise entre -0.03 et -0.05ps$^2$ (miroirs chirpés). Le fonctionnement du dispositif de la figure 8 est par ailleurs analogue à celui décrit en lien avec la figure 7.

Avantageusement, la dispersion globale (somme de la dispersion de l'oscillateur du pré-compensateur, de l'amplificateur et du compresseur) est en général négative, car la dispersion négative du compresseur sert essentiellement à compenser de l'automodulation de phase et non pas pour compenser la dispersion positive d'un composant en amont du compresseur.

Nous avons validé l'approche de pré compensation par ajout d'une dispersion négative avant amplification et mesuré les caractéristiques des impulsions lumineuses en sortie d'un dispositif tel que représenté sur la figure 7.

La figure 9 représente une trace d'auto-corrélation d'impulsion (courbe de mesure) en sortie d'un système amplificateur régénératif suivant le mode de réalisation de la figure 7 et basé sur un ampli amplificateur à disque mince Yb :YAG. L'axe des abscisses représente le temps en picosecondes et l'axe des ordonnées l'amplitude d'auto-corrélation en unités arbitraires (u.a.). La durée $\tau_3$ des impulsions lumineuses en sortie du système d'amplification Yb :YAG est de l'ordre de 350fs.

Les figures 10A et 10B représentent des traces d'auto-corrélation d'impulsion (courbes de mesure) en sortie d'un système amplificateur Yb:KYW suivant le mode de réalisation de la figure 7 et respectivement pour un niveau d'énergie de 40μJ (Fig. 10A) et de 70μJ (Fig. 10B). Le milieu d'amplificateur Yb:KYW présente une largeur de bande de gain supérieur à celle de Yb :YAG. En conséquence, des impulsions bien plus courtes peuvent être obtenues avec un laser Yb :KYW. La différence entre les deux traces est le niveau en énergie (environ 40μJ pour la fig. 10A et environ 70μJ pour la fig. 10B) ce qui correspond à des degrés différents d'automodulation de phase accumulée durant l'amplification. La durée $\tau_3$ des impulsions lumineuses en sortie du système d'amplification à base d'Yb :KYW est respectivement de l'ordre de 150fs sur la fig. 10A et d'environ 110fs sur la fig. 10B.

On extrait des impulsions lumineuses ayant une énergie de plusieurs dizaines à centaines de μJ à partir d'un amplificateur régénératif à disque mince d'Yb:YAG et à partir d'un amplificateur régénératif à base d'Yb :KYW. La durée $\tau_3$ des impulsions lumineuses en sortie du système d'amplification est, dans un premier exemple de réalisation de moins de 300 fs à 350 fs pour l'Yb :YAG et pour une énergie des impulsions lumineuses en sortie de l'ordre de 200 à 300 μJ, et, dans un autre exemple de réalisation, de l'ordre de 100 à 110fs pour l'Yb :KYW et pour une énergie des impulsions lumineuses en sortie de l'ordre de 40 à 70 μJ. Ces résultats représentent de loin les impulsions les plus courtes produites par ce type d'amplificateurs à ces niveaux d'énergie. En effet, la limitation par la largeur de bande de gain pour le matériau Yb:YAG est typiquement autour de 600fs à faible gain et au-dessus de 1 ps pour un amplificateur à fort gain laser (faible gain : *cf.* P. Russbueldt et al., 400W Yb :YAG Innoslab fs-amplifier, Optics Express, 17, 12230-12245, 2009 ; fort gain : *cf.* C. Hönninger et al. ou Larionov et al. déjà cités). La dispersion négative résiduelle nécessaire à la compression d'impulsions après l'amplificateur est de l'ordre de quelques dizaines de milliers de fs$^2$. Avantageusement, nous utilisons un compresseur à réseau de diffraction faiblement dispersif. Toutefois, la faible valeur de la dispersion résiduelle à compresser, permet d'utiliser une configuration plus simple basée sur un compresseur formé de miroirs à dispersion négative fortement réfléchissants.

Selon le mode de réalisation préféré, l'amplificateur est un amplificateur de type régénératif. Toutefois, le même principe peut s'appliquer à d'autres types d'amplificateurs laser comme par exemple les amplificateurs linéaires (à slab) prenant en compte leurs spécificités et leurs limites respectives.

Le dispositif et le procédé de l'invention permettent d'obtenir des impulsions de durée plus courte (environ 300 fs pour Yb :YAG, environ 100fs pour Yb :KYW par exemple) que la limite de largeur de bande de l'amplificateur. La qualité spatiale du faisceau d'impulsions lumineuses n'est pas affectée.

L'invention permet de dépasser plusieurs des limites des systèmes amplificateurs optiques antérieurs et ouvre la voie à la génération d'impulsions femtosecondes de haute énergie au-delà de la limite de la bande de gain. L'approche proposée garantit une haute efficacité, ne requiert pas de module externe additionnel, et permet de maintenir une excellente qualité de faisceau. Le dispositif peut être réalisé en utilisant des composants optiques petits et compacts, notamment intégrés sur fibre optique en amont de l'amplificateur. Le principe de l'invention peut aussi s'appliquer à des lasers de plus faible puissance.

L'invention permet de fabriquer un amplificateur femtoseconde fonctionnant au-delà de la limite de la bande spectrale de gain. La compensation successive dans le compresseur de la dérive de fréquence positive accumulée essentiellement à la fin du cycle d'amplification dans l'amplificateur permet de générer des impulsions de durée $\tau_3$ inférieure à la durée $\tau=1/\Delta v$ de la limitation par la largeur de bande de l'amplificateur optique. Le dispositif est simple et ne requiert pas nécessairement de module de post-compression externe avec couplage à fibre complexe.

## Revendications

1. Système d'amplification optique d'impulsions lumineuses ultrabrèves, de durée inférieure ou égale à dix picosecondes, , ledit système comprenant :

   - un oscillateur (30, 40, 50, 60) apte à émettre des impulsions lumineuses ultrabrèves de durée $\tau_0$ inférieure ou égale à dix picosecondes,
   - un amplificateur optique (32, 42, 52, 62) ayant une largeur de bande spectrale de gain en fréquence $\Delta v$ et une dispersion de vitesse de groupe $\beta_2^{ampli}$, l'amplificateur optique (32, 42, 52, 62) étant disposé de manière à recevoir des impulsions lumineuses et à générer des impulsions lumineuses amplifiées,
   - l'amplificateur optique (32, 42, 52, 62) comportant un amplificateur optique à disque mince ou à slab ou un amplificateur optique à matrice cristalline dopée terre rare ;

   **caractérisé en ce que** le système d'amplification optique comporte :

   - un pré-compensateur (31, 41, 51, 61) optique disposé en amont de l'amplificateur optique (32, 42, 52, 62), le pré-compensateur (31, 41, 51, 61) ayant une dispersion de vitesse de groupe $\beta_2$ négative, de manière à recevoir les impulsions lumineuses ultrabrèves de durée $\tau_0$ et à générer des impulsions lumineuses de durée $\tau_1$ chirpées négativement ;

et **en ce que** :

   - l'amplificateur optique (32, 42, 52, 62) présente une dispersion de vitesse de groupe $\beta_2^{ampli}$ positive, l'amplificateur optique (32, 42, 52, 62) étant disposé de manière à recevoir, amplifier et comprimer temporellement les impulsions lumineuses de durée $\tau_1$ chirpées négativement, l'amplificateur optique étant configuré de manière à ce que les impulsions lumineuses soient aptes à induire un élargissement de la bande spectrale de gain $\Delta v$ par automodulation de phase, de manière à générer des impulsions lumineuses amplifiées et comprimées temporellement ayant une durée $\tau_2$ inférieure ou égale à la durée $\tau_1$, de sorte que les impulsions lumineuses amplifiées et comprimées temporellement ont une durée inférieure à la limitation par la largeur de bande de l'amplificateur optique, lesdites impulsions lumineuses amplifiées et comprimées temporellement ayant une durée inférieure ou égale à dix picosecondes et une énergie supérieure à quelques dizaines de micro-joule.

2. Système d'amplification optique d'impulsions lumineuses ultrabrèves selon la revendication 1 dans lequel la somme de la dispersion de vitesse de groupe $\beta_2$ négative du pré-compensateur (31, 41, 51, 61) et de la dispersion de vitesse de groupe $\beta_2^{ampli}$ positive de l'amplificateur optique (32, 42, 52, 62) est inférieure ou égale à :

$$\beta_2 + \beta_2^{ampli} \leq 0,5\,ps^2$$

3. Système d'amplification optique d'impulsions lumineuses ultrabrèves selon la revendication 1 ou la revendication 2 dans lequel le pré-compensateur (31, 41, 51, 61) comporte une fibre optique à réseau de Bragg à chirp négatif (51), un compresseur à prisme et/ou un compresseur à réseau de diffraction (61).

4. Système d'amplification optique d'impulsions lumineuses ultrabrèves selon la revendication précédente dans lequel l'oscillateur (30, 40, 50, 60) est un oscillateur fibré ou un oscillateur à base de cristaux solide.

5. Système d'amplification optique d'impulsions lumineuses ultrabrèves selon l'une des revendications précédentes comprenant en outre un compresseur (33, 43, 53, 63) disposé de manière à recevoir les impulsions lumineuses amplifiées de durée $\tau_2$, ledit compresseur ayant une dispersion de vitesse de groupe négative apte à compenser une dispersion positive des impulsions lumineuses amplifiées de durée $\tau_2$, de manière à générer des impulsions lumineuses amplifiées et recomprimées temporellement de durée $\tau_3$ inférieure à la durée $\tau_2$.

6. Système d'amplification optique d'impulsions lumineuses ultrabrèves selon la revendication précédente dans lequel la somme de la dispersion de vitesse de groupe négative du pré-compensateur (31, 41, 51, 61), de la dispersion de vitesse de groupe positive de l'amplificateur optique (32, 42, 52, 62) et de la dispersion de vitesse de groupe du compresseur (33, 43, 53, 63) est inférieure ou égale à 0,5 ps².

7. Système d'amplification optique d'impulsions lumineuses ultrabrèves selon la revendication 5 ou la revendication 6 dans lequel le compresseur (33, 43, 53, 63) comporte au moins un miroir à dérive de fréquence négative et/ou au moins un réseau de diffraction.

8. Système d'amplification optique d'impulsions lumineuses ultrabrèves selon l'une des revendications précédentes dans lequel l'amplificateur optique (32, 42, 52, 62) comporte un amplificateur optique à matrice cristalline dopée ytterbium.

9. Procédé d'amplification optique d'impulsions lumineuses ultrabrèves, de durée inférieure ou égale à dix picosecondes, comprenant les étapes suivantes :

   - Génération d'impulsions lumineuses ultrabrèves de durée $\tau_0$ inférieure ou égale à dix picosecondes ;
   - Application aux impulsions lumineuses ultrabrèves de durée $\tau_0$ d'une dispersion de vitesse de groupe négative avant l'amplification de manière à générer des impulsions lumineuses chirpées négativement de durée $\tau_1$ ; et
   - Amplification optique des impulsions lumineuses chirpées négativement, combinée à l'ajout d'une dispersion positive et à un effet d'automodulation de phase dans un milieu amplificateur optique solide comprenant un amplificateur optique à disque mince ou à slab ou un amplificateur optique à matrice cristalline dopée terre rare, de manière à induire un élargissement spectral du milieu amplificateur par automodulation de phase $\Delta v_{Amplificateur} > \Delta v$ et à comprimer temporellement les impulsions lumineuses amplifiées à une durée $\tau_3$ inférieure à la durée $\tau$ de la limitation par la largeur de bande de l'amplificateur optique :

$$\tau_3 \langle \quad \tau = \frac{1}{\Delta v}$$

   - de sorte que lesdites impulsions lumineuses amplifiées et comprimées temporellement ont une durée inférieure ou égale à dix picosecondes et ont une énergie supérieure à plusieurs dizaines de micro-joule.

**Patentansprüche**

1. System zur optischen Verstärkung von ultrakurzen Lichtimpulsen mit einer Dauer von weniger als oder gleich zehn Pikosekunden, wobei das System

   - einen Oszillator (30, 40, 50, 60), der geeignet ist, ultrakurze Lichtimpulse mit einer Dauer $\tau_0$ von weniger als oder gleich zehn Pikosekunden abzugeben,
   - einen optischen Verstärker (32, 42, 52, 62), der eine Bandbreite $\Delta v$ des spektrale Frequenzverstärkungsbandes und eine Streuung der Gruppengeschwindigkeit $\beta_2^{ampli}$ aufweist, wobei der optische Verstärker (32, 42, 52, 62) so angeordnet ist, daß er Lichtimpulse empfängt und Lichtimpulse abgibt,
   - wobei der optische Verstärker (32, 42, 52, 62) einen optischen Verstärker mit dünner Scheibe oder in Slab-Technik oder einen optischen Verstärker mit einer mit seltener Erde dotierten Kristallmatrix aufweist,
   aufweist,

   **dadurch gekennzeichnet, daß** das optische Verstärkungssystem
   - einen optischen Vorkompensator (31, 41, 51, 61) aufweist, der in Strahlengangrichtung gesehen vor dem optischen Verstärker (32, 42, 52, 62) angeordnet ist, wobei der Vorkompensator (31, 41, 51, 61) eine negative Streuung der Gruppengeschwindigkeit $\beta_2$ aufweist, um ultrakurze Lichtimpulse mit einer Dauer $\tau_0$ zu empfangen und negativ gechirpte Lichtimpulse mit einer Dauer $\tau_1$ zu erzeugen,
   und daß
   - der optische Verstärker (32, 42, 52, 62) eine positive Streuung der Gruppengeschwindigkeit $\beta_2^{ampli}$ aufweist, wobei der optische Verstärker (32, 42, 52, 62) so angeordnet ist, daß er die negativ gechirpten Lichtimpulse mit einer Dauer $\tau_1$ empfängt, verstärkt und zeitlich komprimiert, wobei der optische Verstärker so ausgelegt ist, daß die Lichtimpulse geeignet sind, eine Vergrößerung der Bandbreite $\Delta v$ des spektralen Frequenzverstärkungsbandes durch Selbstphasenmodulation zu bewirken, um verstärkte und zeitlich komprimierte Lichtimpulse mit einer

Dauer $\tau_2$ zu erzeugen, die kürzer oder gleich der Dauer $\tau_1$ ist, damit die verstärkten und zeitlich komprimierten Lichtimpulse eine Dauer aufweisen, die unterhalb der Begrenzung durch die Bandbreite des optischen Verstärkers liegt, wobei die verstärkten und zeitlich komprimierten Lichtimpulse eine Dauer von weniger als oder gleich zehn Pikosekunden und eine Energie von mehr als einigen Zehnereinheiten von Mikrojoule aufweise.

2. System zur optischen Verstärkung von ultrakurzen Lichtimpulsen gemäß Anspruch 1, bei dem die Summe aus der negativen Streuung der Gruppengeschwindigkeit $\beta_2$ des Vorkompensators (31, 41, 51, 61) und der positiven Streuung der Gruppengeschwindigkeit $\beta_2^{\mathrm{ampli}}$ des optischen Verstärkers (32, 42, 52, 62) kleiner oder gleich

$$\beta_2 + \beta_2^{\mathrm{ampli}} \leq 0{,}5\ \mathrm{ps}^2$$

ist.

3. System zur optischen Verstärkung von ultrakurzen Lichtimpulsen gemäß Anspruch 1 oder Anspruch 2, bei dem der Vorkompensator (31, 41, 51, 61) eine optische Faser mit negativ gechirptem Bragg-Gitter (51), einen Kompressor mit Prisma und/oder einen Kompressor mit Beugungsgitter (61) aufweist.

4. System zur optischen Verstärkung von ultrakurzen Lichtimpulsen gemäß dem vorangehenden Anspruch, bei dem der Oszillator (30, 40, 50, 60) ein Oszillator mit Fasern oder ein Oszillator auf Festkristallbasis ist.

5. System zur optischen Verstärkung von ultrakurzen Lichtimpulsen gemäß einem der vorangehenden Ansprüche, der außerdem einen Kompressor (33, 43, 53, 63) aufweist, der so angeordnet ist, daß er die verstärkten Lichtimpulse mit einer Dauer $\tau_2$ empfangen kann, wobei der Kompressor eine negative Streuung der Gruppengeschwindigkeit aufweist, die geeignet ist, eine positive Streuung der verstärkten Lichtimpulse mit einer Dauer $\tau_2$ zu kompensieren, um verstärkte und zeitlich wieder komprimierte Lichtimpulse einer Dauer $\tau_3$, die kürzer als die Dauer $\tau_2$ ist, zu erzeugen.

6. System zur optischen Verstärkung von ultrakurzen Lichtimpulsen gemäß dem vorangehenden Anspruch, bei dem die Summe aus der negativen Streuung der Gruppengeschwindigkeit des Vorkompensators (31, 41, 51, 61), der positiven Streuung der Gruppengeschwindigkeit des optischen Verstärkers (32, 42, 52, 62) und der Streuung der Gruppengeschwindigkeit des Kompressor (33, 43, 53, 63) kleiner oder gleich 0,5 ps$^2$ ist.

7. System zur optischen Verstärkung von ultrakurzen Lichtimpulsen gemäß Anspruch 5 oder Anspruch 6, bei dem der Kompressor (33, 43, 53, 63) wenigstens einen Spiegel mit negativer Frequenzdrift und/oder wenigstens ein Beugungsgitter aufweist.

8. System zur optischen Verstärkung von ultrakurzen Lichtimpulsen gemäß einem der vorangehenden Ansprüche, bei dem der optische Verstärker (32, 42, 52, 62) einen optischen Verstärker mit einer mit Ytterbium dotierten Kristallmatrix aufweist.

9. Verfahren zur optischen Verstärkung von ultrakurzen Lichtimpulsen mit einer Dauer von weniger als oder gleich zehn Pikosekunden, das die folgenden Schritte aufweist:

   - Erzeugen von ultrakurzen Lichtimpulsen mit einer Dauer $\tau_0$ von weniger als oder gleich zehn Pikosekunden,
   - Anwenden einer negativen Streuung der Gruppengeschwindigkeit auf die ultrakurzen Lichtimpulse mit einer Dauer $\tau_0$ vor der Verstärkung, um negativ gechirpte Lichtimpulse der Dauer $\tau_1$ zu erzeugen, und
   - optisches Verstärken der negativ gechirpten Lichtimpulse zusammen mit dem Hinzufügen einer positiven Streuung und dem Selbstphasenmodulationseffekt in einer festen optischen verstärkenden Umgebung, die einen optischen Verstärker mit dünner Scheibe oder Stab-Effekt oder einen optischen Verstärker mit einer mit seltener Erde dotierten Kristallmatrix aufweist, um eine spektrale Verbreiterung der verstärkenden Umgebung durch Selbstphasenmodulation $\Delta \nu_{\mathrm{Verstärker}} > \Delta \nu$ zu bewirken und die verstärkten Lichtimpulse zeitlich auf eine einer Dauer $\tau_3$ zu komprimieren, die kürzer als die Dauer $\tau$ der Begrenzung durch die Bandbreite des optischen Verstärkers ist:

   $$\tau_3 < \tau = \frac{1}{\Delta \nu}\ ,$$

   - so daß die verstärkten und zeitlich komprimierten Lichtimpulse eine Dauer von weniger als oder gleich zehn Pikosekunden und eine Energie von mehr als einigen Zehnereinheiten von Microjoule aufweisen.

## Claims

1. A system for optical amplification of ultrashort light pulses of duration lower than or equal to ten picoseconds, said system comprising:

   - an oscillator (30, 40, 50, 60) adapted to emit ultrashort light pulses of duration $\tau_0$ lower than or equal to ten picoseconds,
   - an optical amplifier (32, 42, 52, 62) having a spectral frequency gain bandwidth $\Delta v$ and a group velocity dispersion $\beta_2^{ampli}$, the optical amplifier (32, 42, 52, 62) being arranged so as to receive light pulses and to generate amplified light pulses,
   - the optical amplifier (32, 42, 52, 62) including a thin-disk or slab optical amplifier or a crystalline-matrix optical amplifier doped with rare earth,

   **characterized in that** the optical amplification system includes:

   - an optical pre-compensator (31, 41, 51, 61) arranged upstream from the optical amplifier (32, 42, 52, 62), the pre-compensator (31, 41, 51, 61) having a negative group velocity dispersion $\beta_2$, so as to receive the ultrashort light pulses of duration $\tau_0$ and to generate negatively chirped light pulses of duration $\tau_1$;

   and **in that**:

   - the optical amplifier (32, 42, 52, 62) has a positive group velocity dispersion $\beta_2^{ampli}$, the optical amplifier (32, 42, 52, 62) being arranged so as to receive, amplify and time-compress the negatively chirped light pulses of duration $\tau_1$, the optical amplifier being configured so that the light pulses are able to induce a broadening of the spectral gain band $\Delta v$ by self-phase modulation, so as to generate amplified and time-compressed light pulses having a duration $\tau_2$ lower than or equal to the duration $\tau_1$, so that said amplified and time-compressed light pulses have a duration lower than the limitation by the bandwidth of the optical amplifier, said amplified and time-compressed light pulses having a duration lower than or equal to ten picoseconds and an energy higher than a few tens of microjoules.

2. The system for optical amplification of ultrashort light pulses according to claim 1, wherein the sum of the negative group velocity dispersion $\beta_2$ of the pre-compensator (31, 41, 51, 61) and of the positive group velocity dispersion $\beta_2^{ampli}$ of the optical amplifier (32, 42, 52, 62) is lower than or equal to:

$$\beta_2 + \beta_2^{ampli} \leq 0.5\ \text{ps}^2.$$

3. The system for optical amplification of ultrashort light pulses according to claim 1 or claim 2, wherein the pre-compensator (31, 41, 51, 61) includes a negative-chirp optical fiber Bragg-grating (51), a prism compressor and/or a diffraction-grating compressor (61).

4. The system for optical amplification of ultrashort light pulses according to the preceding claim, wherein the oscillator (30, 40, 50, 60) is a fibered oscillator or a solid-crystal oscillator.

5. The system for optical amplification of ultrashort light pulses according to any one of the preceding claims, further comprising a compressor (33, 43, 53, 63) arranged so as to receive the amplified light pulses of duration $\tau_2$, said compressor having a negative group velocity dispersion adapted to compensate for a positive dispersion of the amplified light pulses of duration $\tau_2$, so as to generate amplified and time-recompressed light pulses of duration $\tau_3$ lower than the duration $\tau_2$.

6. The system for optical amplification of ultrashort light pulses according to the preceding claim, wherein the sum of the negative group velocity dispersion of the pre-compensator (31, 41, 51, 61), the positive group velocity dispersion of the optical amplifier (32, 42, 52, 62) and the group velocity dispersion of the compressor (33, 43, 53, 63) is lower than or equal to 0.5 ps$^2$.

7. The system for optical amplification of ultrashort light pulses according to claim 5 or claim 6, wherein the compressor (33, 43, 53, 63) includes at least one negatively chirped mirror and/or at least one diffraction grating.

8. The system for optical amplification of ultrashort light pulses according to one of the preceding claims, wherein the optical amplifier (32, 42, 52, 62) includes a crystal-matrix optical amplifier doped with ytterbium.

9. A method of optical amplification of ultrashort light pulses of duration lower than or equal to ten picoseconds comprising the following steps:

   - generating ultrashort light pulses of duration $\tau_0$ lower than or equal to ten picoseconds;
   - applying to the ultrashort light pulses of dura-

tion $\tau_0$ a negative group velocity dispersion before amplification, so as to generate negatively chirped light pulses of duration $\tau_1$; and

- applying an optical amplification to the negatively chirped light pulses, combined with the adding of a positive dispersion and an effect of self-phase modulation in a solid optical amplifying medium including a thin-disk or slab optical amplifier or a crystalline-matrix optical amplifier doped with rare earth, so as to induce a spectral broadening of the amplifying medium by self-phase modulation $\Delta v_{\text{Amplifier}} > \Delta v$ and to time-compress the amplified light pulses to a duration $\tau_3$ lower than the duration $\tau$ of the limitation by the bandwidth of the optical amplifier:

$$\tau_3 \langle \tau = \frac{1}{\Delta v}$$

so that said amplified and time-compressed light pulses have a duration lower than or equal to ten picoseconds and an energy higher than a few tens of microjoules.

# Fig. 1
ART ANTÉRIEUR

10       1       2       3

$\tau_0$      $\tau_1$      $\tau_2$      $\tau_3$

# Fig. 2
ART ANTÉRIEUR

10       12       13

$\tau_0$      $\tau_2$      $\tau_3 < \tau_2$

# Fig. 3
ART ANTÉRIEUR

20       22       23

$\tau_0$      $\tau_2$      $\tau_3 < \tau_2$

## Fig. 4

$$\lambda_1 < \lambda_2 < \lambda_3 < \lambda_4$$

## Fig. 5

## Fig. 6

# Fig. 7

# Fig. 8

# Fig. 9

# Fig. 10A

# Fig. 10B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040190119 A1
- EP 2086074 A2

- WO 03096495 A

**Littérature non-brevet citée dans la description**

- **D. STRICKLAND ; G. MOUROU.** Compression of amplified chirped optical pulses. *Opt. Commun.,* 1985, vol. 56, 219
- **SIEGMAN.** Lasers. University Science Books, vol. 78, 359
- **C. HÖNNINGER et al.** Diode-pumped thin-disk Yb:YAG regenerative amplifier. *Appl. Phys. B,* 1997, vol. 65, 423-426
- **LARIONOV, BUTZE ; NICKEL, GIESEN.** High-repetition-rate regenerative thin-disk amplifier with 116 μJ pulse energy and 250 fs pulse duration. *Optics Letters,* 2007, vol. 32 (5), 494-496
- **LARIONOV ; BUTZE ; NICKEL ; GIESEN.** High-repetition-rate regenerative thin-disk amplifier with 116 μJ pulse energy and 250 fs pulse duration. *Optics Letters,* 2007, vol. 32 (5), 494-496
- **LARIONOV.** 50 W thin-disk laser with variable pulse duration. *Proc. SPIE,* 2011, vol. 7912, 79120A

- **W. DIETEL et al.** Self Phase Modulation in a Femtosecond Pulse Amplifier with Subséquent Compression. *Appl. Phys. B,* 1988, vol. 46, 183-184
- **C.V. SHANK ; R.L. FORK ; R. YEN ; R.H. STOLEN.** *Appl. Phys. Lett.,* 1982, vol. 40n, 761
- **T. DAMM ; M. KASCHKE ; F. NOACK ; B. WILHELMI.** *Opt. Lett.,* 1985, vol. 10, 176
- **M. NISOLI ; S. STAGIRA ; S. DE SILVESTRI ; O. SVELTO ; S. SARTANIA ; Z. CHENG ; M. LENZNER ; CH. SPIELMANN ; F. KRAUSZ.** *Appl. Phys. B,* 1997, vol. 65, 186-196
- **M. NISOLI et al.** *Appl. Phys. B,* 1997, vol. 65, 186-196
- **P. RUSSBUELDT et al.** 400W Yb :YAG Innoslab fs-amplifier. *Optics Express,* 2009, vol. 17, 12230-12245